# EUROPEAN PATENT APPLICATION

(11) **EP 4 160 517 A1**
(43) Date of publication of application: **05.04.2023**
(21) Application number: 21812741.3
(22) Date of filing: 27.05.2021
(51) Int. Cl.: G06Q 50/12

(54) **CONGESTION INFORMATION DISPLAY SYSTEM, CONGESTION INFORMATION DISPLAY METHOD, AND PROGRAM**

(30) Priority: 29.05.2020 JP 2020093871
(71) Applicant: TOPPAN INC., Tokyo 110-0016 (JP)
(72) Inventor: TSUCHIYA Ryo, Tokyo 110-0016 (JP); ICHINOSE Fumika, Tokyo 110-0016 (JP); TANAKA Shinichi, Tokyo 110-0016 (JP)
(74) Representative: TBK
(86) International application number: PCT/JP2021/020137
(87) International publication number: WO 2021/241669

(57) **Abstract**

A congestion information display system includes: a storage unit configured to store a prediction model which enables prediction of a congestion status of a facility; a prediction unit configured to predict a time when the congestion status of the facility is changed from a first congestion status to a second congestion status, based on the prediction model; and a display processing unit configured to display, on a display device, prediction information indicating that the congestion status is changed at the time predicted by the prediction unit.

## Description

### [Technical Field]

The present invention relates to a congestion information display system, a congestion information display method, and a program.

Priority is claimed on Japanese Patent Application No. 2020-093871, filed May 29, 2020, the content of which is incorporated herein by reference.

### [Background Art]

Conventionally, various technologies have been proposed for presenting real-time vacant seat information of a facility to customers who are considering going to a facility such as a restaurant or customers who are considering making a reservation.

For example, in the following Patent Document 1, a sensor or a camera detects that visitors to a store are seated. Patent Document 1 discloses a technology for updating in real-time vacant seat information referred to by a reserving party at the time of making a reservation based on the detected results.

### [Citation List]

### [Patent Document]

[Patent Document 1]
Japanese Patent No. 6414944

### [Summary of Invention]

### [Technical Problem]

However, even if the user moves to the facility after checking vacant seats in the facility with the vacant seat information, the status of the vacant seats is changed while the user moves to the facility, and there may be no vacant seats when the user arrives at the facility. In this case, the user of the facility needs to wait until the seat becomes vacant. It is desirable for the users of the facility to know not only if seats are currently vacant, but also when the seats are vacant.

In view of the above problems, an object of the present invention is to provide a congestion information display system, a congestion information display method, and a program that can shorten a waiting time of the user at the facility in order to use the facility.

### [Solution to Problem]

In order to solve the problems, according to one aspect of the present invention, a congestion information display system includes: a storage unit configured to store a prediction model which enables prediction of a congestion status of a facility; a prediction unit configured to predict a time when the congestion status of the facility is changed from a first congestion status to a second congestion status, based on the prediction model; and a display processing unit configured to display, on a display device, prediction information indicating that the congestion status is changed at the time predicted by the prediction unit.

In order to solve the problems, according to one aspect of the present invention, a congestion information display method includes: storing, via a storage unit, a prediction model which enables prediction of a congestion status of a facility; predicting, via a prediction unit, a time when the congestion status of the facility is changed from a first congestion status to a second congestion status based on the prediction model; and displaying, on a display processing unit, prediction information indicating that the congestion status is changed at the time predicted by the prediction unit on a display device.

In order to solve the problems, according to one aspect of the present invention, a program for causing a computer to function as: a storage unit configured to store a prediction model which enables prediction of a congestion status of a facility; a prediction unit configured to predict a time when the congestion status of the facility is changed from a first congestion status to a second congestion status based on the prediction model; and a display processing unit configured to display, on a display device, prediction information indicating that the congestion status is changed at the time predicted by the prediction unit.

### [Advantageous Effects of Invention]

According to the present invention, a time when the user waits in the facility in order to use the facility can be shortened.

### [Brief Description of Drawings]

FIG. 1 is a diagram showing an example of a configuration of a congestion information display system according to an embodiment of the present invention.
FIG. 2A is a diagram showing an example of sensing information associated with date and time according to the embodiment.
FIG. 2B is a diagram showing an example of contents of the sensing information according to the embodiment.
FIG. 3A is a diagram showing an example of congestion information associated with date and time according to the embodiment.
FIG. 3B is a diagram showing an example of contents of the congestion information according to the embodiment.
FIG. 4 is a diagram showing an example of input and output of a trained model according to the embodiment.
FIG. 5A is a diagram showing an example of the congestion information associated with date and time according to the embodiment.
FIG. 5B is a diagram showing an example of table information according to the embodiment.
FIG. 6A is a diagram showing an example of a display image showing congestion information according to the embodiment.
FIG. 6B is a diagram showing an example of a display image showing prediction information in text according to the embodiment.
FIG. 6C is a diagram showing an example of a display image illustrating the prediction information according to the embodiment.
FIG. 6D is a diagram showing an example of a display image including a duration time of a second congestion status as prediction information according to the embodiment.
FIG. 6E is a diagram showing an example of a display image including temporal changes of the congestion status as prediction information according to the embodiment.
FIG. 7 is a flowchart showing an example of a processing flow in a congestion information display system 1 according to the embodiment.

### [Description of Embodiments]

Hereinafter, embodiments of the present invention will be described in detail with reference to the drawings.

### <1. Configuration of Congestion Information Display System>

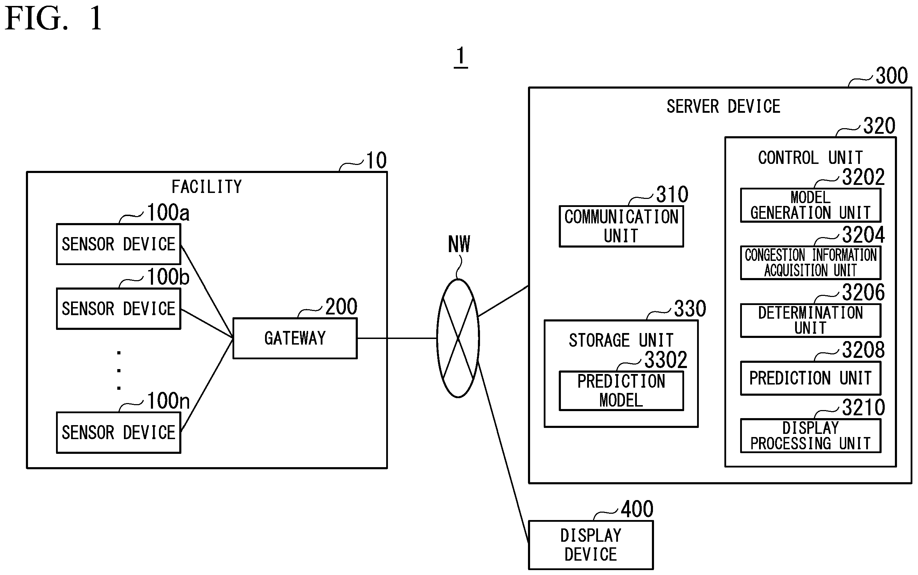

FIG. 1 is a diagram showing an example of a configuration of a congestion information display system according to a first embodiment. As shown in FIG.1, a congestion information display system 1 includes sensor devices 100a to 100n, a gateway 200, a server device 300, and a display device 400. The sensor devices 100a to 100n (n is a natural number) and the gateway 200 are provided in a facility 10. Hereinafter, the "sensor device 100" is collectively referred to as the sensor devices 100a to 100n, unless otherwise stated to distinguish the sensor devices 100a to 100n from one another.

A facility 10 is a display target of congestion information and prediction information. The congestion information is information indicating a congestion status of the facility. The prediction information is information indicating a timing at which the congestion status of the facility is changed.

Examples of the facility 10 include a restaurant, a movie theater, a self-study room of a cram school, a fitness gym, and the like.

In a case of facilities where users use seats, such as a restaurant, a movie theater, and a self-study room of a cram school, for example, information on a vacancy status of the seats is displayed as the congestion information or the prediction information. Examples of the facilities include a facility that displays a vacancy status of seats as the congestion information and a facility that displays a usage status of equipment as the congestion information.

In a case of the facility where the user uses equipment, such as a fitness gym, for example, information on the usage status of the equipment is displayed as the congestion information or the prediction information.

Hereinafter, in the embodiment, an example will be described in which the facility 10 is a restaurant, and the congestion information and the prediction information are information indicating a vacancy status in the restaurant.

The sensor device 100 acquires sensing information on the presence or absence of users of the facility. For example, the sensor device 100 is provided for each seat of the facility, and acquires the sensing information on the presence or absence of users for each seat. An example of the sensor device 100 includes a human sensor. The sensor device 100 is not limited to the human sensor. For example, the sensor device 100 may be a sensor capable of detecting a person, such as a camera or a thermal sensor.

The sensor device 100 is communicably connected to the gateway 200. For example, the sensor device 100 communicates with the gateway 200 by wireless connection such as Bluetooth (registered trademark) and Wi-Fi (registered trademark).

The sensor device 100 transmits various information to the gateway 200 by communication. For example, the sensor device 100 includes identification information, sensing information, surface information, operation information, and the like of the sensor device 100.

The identification information is an identification (ID) unique to the sensor device 100. Hereinafter, the ID is also referred to as a "sensor ID". The operation information is information for determining whether or not the sensor device 100 is operating, and is, for example, information indicating a remaining amount of a battery of the sensor device 100.

The gateway 200 is a device that relays between the sensor device 100 and the server device 300. The gateway 200 is communicably connected to the server device 300 by a network NW. The gateway 200 transmits various information input from the sensor device 100 to the server device 300 via the network NW.

Here, various information is identification information, sensing information, and operation information of the sensor device 100. The gateway 200 also transmits the identification information of the gateway 200 to the server device 300, in addition to various information input from the sensor device 100. The identification information is an ID unique to the gateway 200. Hereinafter, the ID is also referred to as a "gateway ID". Since one gateway 200 is provided for one facility 10, the facility 10 can be specified by associating the gateway ID with a facility name and the like.

The gateway 200 and the server device 300 are connected to each other by, for example, a wide area network (WAN). The WAN is realized by, for example, internet connection.

The server device 300 is a device that acquires the congestion information and the prediction information of the facility 10 based on the sensing information of the sensor device 100. The server device 300 receives various information including the sensing information from the gateway 200 via the network NW. The server device 300 acquires the congestion information or the prediction information based on the sensing information received from the gateway 200.

Further, the server device 300 is connected to the display device 400 by the network NW. The server device 300 is communicably connected to the gateway 200. The server device 300 transmits the congestion information or the prediction information to the display device 400 via the network NW.

The server device 300 and the display device 400 are connected by, for example, the WAN.

The display device 400 is a device that displays the congestion information or the prediction information. The display device 400 receives the congestion information or the prediction information from the server device 300 and displays the congestion information or the prediction information via the network NW.

The display device 400 is realized by, for example, a device such as a smartphone, a tablet terminal, a personal computer (PC), or a digital signage.

### <2. Functional Configuration of Server Device>

The functional configuration of the server device 300 according to the first embodiment will be described with reference to FIG. 1. As shown in FIG. 1, the server device 300 includes a communication unit 310, a control unit 320, and a storage unit 330.

### (1) Communication Unit 310

The communication unit 310 has a function of transmitting and receiving various information. For example, the communication unit 310 receives various information from the sensor device 100 via the gateway 200 and the network NW. Specifically, the communication unit 310 receives the identification information, the sensing information, the operation information of the sensor device 100, and identification information and the like of the gateway 200. The communication unit 310 inputs the received various information to the control unit 320.

Further, the communication unit 310 transmits the congestion information or the prediction information input from the control unit 320, which will be described later, to the display device 400 via the network NW.

### (2) Control Unit 320

The control unit 320 has a function of controlling the overall operation of the server device 300. The control unit 320 is realized by causing a central processing unit (CPU) provided as hardware in the server device 300 to execute a program, for example.

As shown in FIG. 1, the control unit 320 includes a model generation unit 3202, a congestion information acquisition unit 3204, a determination unit 3206, a prediction unit 3208, and a display processing unit 3210.

### (2-1) Model Generation Unit 3202

The model generation unit 3202 has a function of generating a prediction model 3302. The prediction model is a model for predicting a timing at which the congestion status in the facility 10 is changed. The model generation unit 3202 stores the generated prediction model 3302 in the storage unit 330.

The model generation unit 3202 generates a prediction model based on at least the congestion information. The method of generating a prediction model by the model generation unit 3202 is not particularly limited.

For example, the model generation unit 3202 generates a prediction model using artificial intelligence (AI). An example of a method of generating a prediction model by the AI includes a machine learning method (deep learning) using a multi-layered artificial neural network.

The model generation unit 3202 generates, as a prediction model, a trained model obtained by machine learning, based on sensing information associated with date and time and congestion information corresponding to the sensing information. The sensing information associated with the date and time is, for example, information in which the sensing information acquired by the sensor device 100 and the date and time when the sensor device 100 acquires the sensing information are associated. The congestion information corresponding to the sensing information is information acquired based on the sensing information acquired by the sensor device 100.

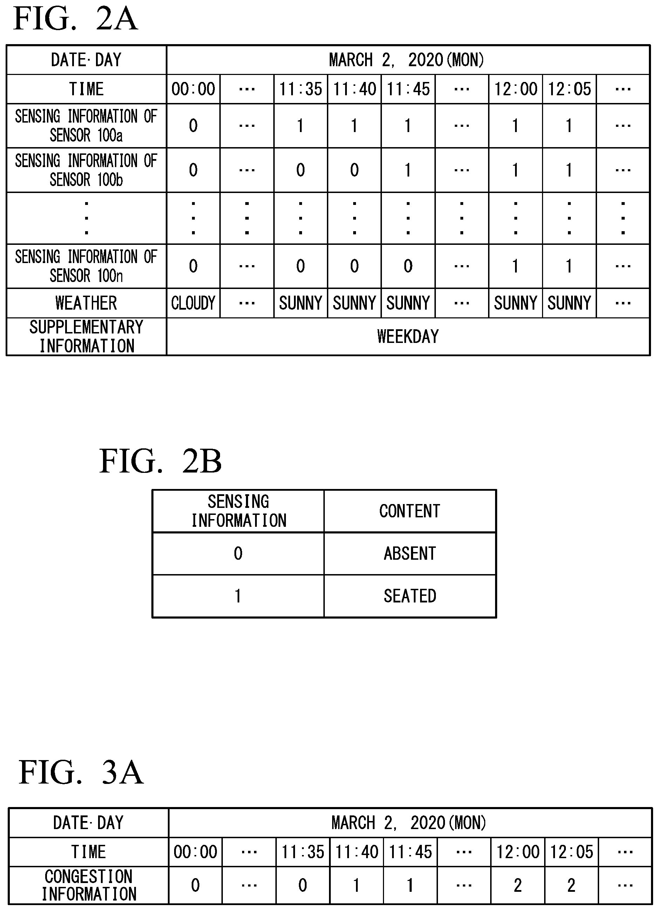

Here, the sensing information associated with the date and time will be described with reference to FIGS. 2A and 2B. FIG. 2A is a diagram showing an example of sensing information associated with date and time according to the embodiment. FIG. 2B is a diagram showing an example of contents of the sensing information according to the embodiment. FIG. 2A shows sensing information acquired by the sensor devices 100a to 100n provided in the facility 10.

FIG. 2A shows sensing information acquired by the sensor devices 100a to 100n on "March 2, 2020 (Mon)" as an example. As indicated by times in FIG. 2A, the sensing information is acquired and recorded at intervals of five minutes. The sensing information of the sensor devices 100a-100n is indicated by "0" or "1".

As shown in FIG. 2B, "0" of the sensing information means that the user is "absent", and "1" means that the user is "seated". As shown in FIG. 2A, the sensing information may be associated with information (supplementary information) indicating weather each time when the sensing information is acquired or whether the day when the sensing information is acquired is "weekday" or "holiday".

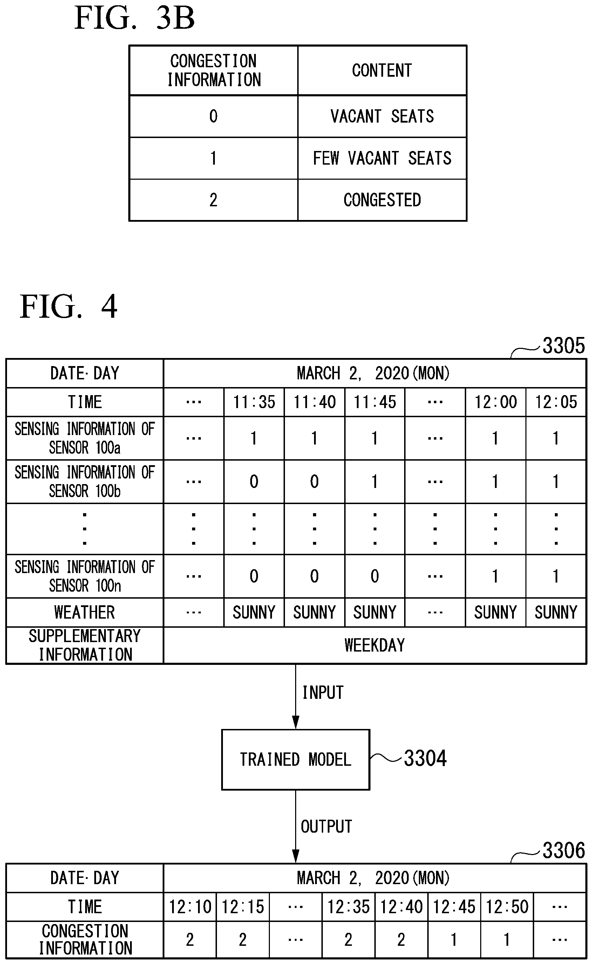

Here, the congestion information associated with the date and time will be described with reference to FIGS. 3A and 3B. FIG. 3A is a diagram showing an example of the congestion information associated with date and time according to the embodiment. FIG. 3B is a diagram showing an example of contents of the congestion information according to the embodiment. FIG. 3A shows the congestion information in the facility 10.

FIG. 3A shows congestion information acquired on "March 2, 2020 (Mon)" as an example. As indicated by times in FIG. 3A, the congestion information is acquired and recorded at intervals of five minutes.

The congestion information of the facility 10 is indicated by "0", "1", or "2". As shown in FIG. 3B, the congestion information "0" indicates that the congestion status is "vacant seats", "1" indicates that the congestion status is "few vacant seats", and "2" indicates that the congestion status is "congested".

The model generation unit 3202 generates a trained model that has learned a correspondence relationship between the sensing information and the congestion information, as an input of the sensing information and the congestion information associated with the date and time described above. Specifically, the trained model is a model that has been trained so that it can predict what kind of congestion status will occur when what kind of sensing information is acquired. As a result, the trained model can predict and output a timing at which the congestion status is changed when the sensing information is input.

Here, the input and output of the trained model will be described with reference to FIG. 4. FIG. 4 is a diagram showing an example of input and output of a trained model according to the embodiment. In an example shown in FIG. 4, it is assumed that a current time is "12:05" on "March 2, 2020 (Mon)".

As shown in FIG. 4, a trained model 3304 outputs output data 3306 when input data 3305 is input. The input data 3305 is sensing information acquired by "12:05" on "Monday, March 2, 2020".

When the input data 3305 is input, the trained model 3304 outputs the output data 3306 indicating congestion information after the current time "12:05". It is predicted from the output data 3306 that the congestion information acquired from "12:10" to "12:40" is "2" and the congestion information acquired after "12:45" is "1". This can be seen that the congestion status from "12:10" to "12:40" is "congested", and there will be vacant seats after "12:45" (that is, 40 minutes after the current time).

Moreover, the model generation unit 3202 may be generated a prediction model by statistical analysis. For example, the model generation unit 3202 calculates a representative value indicating congestion information for each predetermined time and day, based on the congestion information associated with the date and time. The model generation unit 3202 generates, as a prediction model, table information in which a predetermined time on each day is associated with the representative value calculated for each predetermined time. The representative value is either a mode value, a median value, or a mean value in a predetermined data section. Hereinafter, an example in which the mode value is calculated as the representative value will be described.

For example, the model generation unit 3202 calculates the number of acquisitions of each of "vacant seats (0)", "few vacant seats (1)", and "congested (2)" for each predetermined time on each day, based on the congestion information acquired in the past. The model generation unit 3202 sets, to a representative value, a value of the congestion information that has been acquired most frequently for each predetermined time on each day.

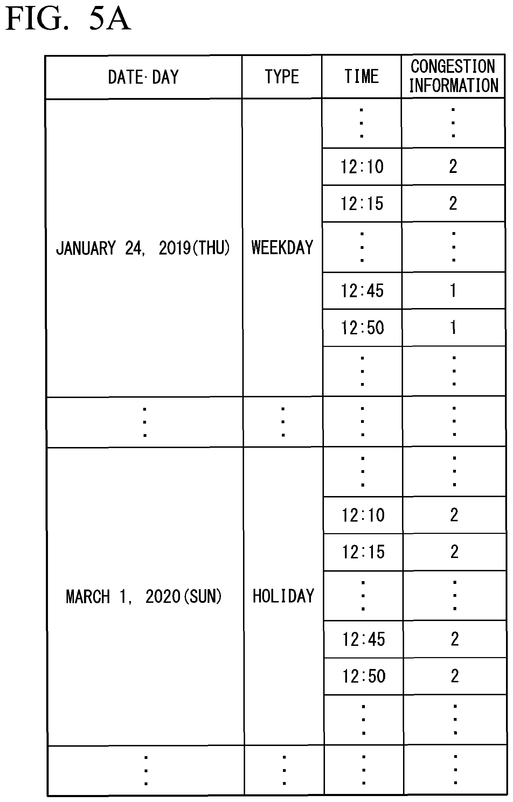

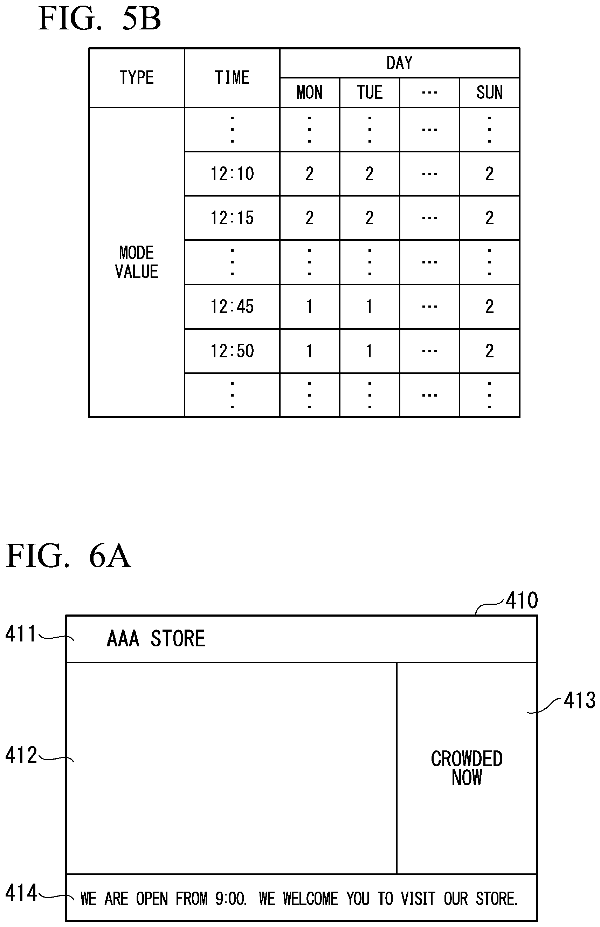

Here, the congestion information associated with the date and time and the table information will be described with reference to FIGS. 5A and 5B. FIG. 5A is a diagram showing an example of the congestion information associated with date and time according to the embodiment. FIG. 5B is a diagram showing an example of table information according to the embodiment. Although FIG. 5A shows the congestion information acquired after "January 24, 2019 (Thu)", the congestion information is not limited to the above example.

FIG. 5A shows congestion information acquired on "January 24, 2019 (Thu)" and "March 1, 2020 (Sun)" as examples of congestion information acquired after "January 24, 2019 (Thu)". FIG. 5A shows the congestion information acquired at intervals of five minutes, in which a type of data for "January 24, 2019 (Thu)" is "weekday". FIG. 5A shows the congestion information acquired at intervals of five minutes similarly, in which a type of data for "March 1, 2020 (Sun)" is "holiday". The model generation unit 3202 generates table information from the congestion information that is acquired in the past and accumulated as shown in FIG. 5A.

FIG. 5B shows an example of table information generated by the model generation unit 3202. The table information shown in FIG. 5B shows the congestion information having a mode value of the number of acquisitions among the congestion information acquired for each predetermined time of each day. As an example, at "12:10" and "12:15" on Tuesday, it can be said that the number of acquisitions of "congested (2)" is the mode value. In addition, at "12:45" and "12:50" on Tuesday, it can be said that the number of acquisitions of "few vacant seats (1)" is the mode value.

### (2-2) Congestion Information Acquisition Unit 3204

The congestion information acquisition unit 3204 has a function of acquiring the congestion information. For example, the congestion information acquisition unit 3204 acquires the congestion information based on the sensing information input from the communication unit 310. The congestion information acquisition unit 3204 inputs the acquired congestion information to the determination unit 3206 and the display processing unit 3210.

For example, the congestion information acquisition unit 3204 acquires congestion information based on the presence or absence of users indicated by sensing information acquired for each seat in the facility 10. Specifically, the congestion information acquisition unit 3204 calculates a percentage of seats where the users are "seated" among the seats in the facility 10. When the calculated percentage is 100%, the congestion information acquisition unit 3204 acquires the "congested (2)" as the congestion information. When the calculated percentage is equal to or more than a first threshold and less than 100%, the congestion information acquisition unit 3204 acquires the "few vacant seats (1)" as the congestion information. When the calculated percentage is less than the first threshold, the congestion information acquisition unit 3204 acquires the "vacant seats (0)" as the congestion information.

### (2-3) Determination Unit 3206

The determination unit 3206 determines a current congestion status of the facility 10. For example, the determination unit 3206 determines the current congestion status of the facility 10 based on the congestion information input from the congestion information acquisition unit 3204. The determination unit 3206 also determines whether or not the current congestion status of the facility 10 is the same as the previously determined congestion status. The determination unit 3206 inputs a determination result to the prediction unit 3208.

### (2-4) Prediction Unit 3208

The prediction unit 3208 predicts a time when the congestion status of the facility 10 is changed from a first congestion status to a second congestion status, based on the prediction model 3302. The prediction unit 3208 can easily predict the time by using the prediction model 3302 generated in advance by the model generation unit 3202.

Hereinafter, an example will be described in which the first congestion status is "congested" and the second congestion status is "few vacant seats" or "vacant seats". That is, an example will be described in which the prediction unit 3208 predicts an occurrence time of vacant seats (prediction of vacant seats) will be described.

When the determination unit 3206 determines that the current congestion status of the facility 10 is "congested", the prediction unit 3208 predicts the time when the current congestion status of the facility 10 is changed from "congested" to "few vacant seats" or "vacant seats". When the prediction model 3302 is a trained model, the prediction unit 3208 acquires a prediction result by inputting sensing information acquired up to the current time to the trained model. The prediction unit 3208 inputs the acquired prediction result to the display processing unit 3210.

On the other hand, when the prediction model 3302 is table information, the prediction unit 3208 acquires the prediction result by referring to the table information at the current date and time. Here, an example of prediction when the prediction model 3302 is the table information shown in FIG. 5B will be described. For example, the congestion information in which the current date and time is "12:10" and "March 2, 2020 (Mon)" is "2". In this case, the prediction unit 3208 searches for a time after "12:10" on "Monday" when the congestion information is "1" or "0".

In the table information shown in FIG. 5B, the congestion information is changed to "1" at "12:45". Thus, the prediction unit 3208 predicts that a time when the congestion status of the facility 10 is changed from the first congestion status to the second congestion status is "12:45". The prediction unit 3208 inputs the acquired prediction result to the display processing unit 3210.

The prediction unit 3208 may further predict a duration time of the second congestion status. For example, the prediction unit 3208 predicts a first time when the first congestion status is changed to the second congestion status, and then predicts a second time when the second congestion status is changed to a third congestion status. The prediction unit 3208 calculates a calculation result of a difference between the second time and the first time as the duration time of the second duration status.

The prediction unit 3208 may collectively predict congestion statuses at a plurality of times after the current time. For example, the prediction unit 3208 collectively predicts congestion statuses at predetermined time intervals after the current time. The prediction unit 3208 may input all the prediction results to the display processing unit 3210, or may input only the prediction result at the time when the congestion status is changed to the display processing unit 3210.

### (2-5) Display Processing Unit 3210

The display processing unit 3210 has a function of controlling display processing of each information. For example, the display processing unit 3210 displays the congestion information input from the congestion information acquisition unit 3204 on the display device 400. Specifically, the display processing unit 3210 generates a display image showing the congestion information based on the congestion information. After the generation, the display processing unit 3210 transmits the display image to the display device 400 via the communication unit 310 and displays the display image.

The display processing unit 3210 can visualize the congestion information of the facility 10 by displaying the display image on the display device 400. When the facility 10 is a restaurant as in the present embodiment, the display processing unit 3210 can display congestion information such as a vacancy status. As a result, the user can easily grasp the congestion status in the restaurant by looking at the display image. Further, the user of the restaurant can adjust a usage time zone, usage mode, and the like of the restaurant by checking the congestion information displayed on the display device 400.

For example, the user can check the congestion status in advance, to thereby adjust the usage time zone and shorten the waiting time so as to avoid the congestion time zone such as lunch time. In addition, the user can check the congestion status in advance, to thereby visit the store on the premise of taking out without using the store for avoiding the congestion. Further, the user avoids the congestion based on the congestion status, to thereby avoid other users crowded in the store.

Thus, the congestion information display system 1 can alleviate a stress on the user due to the congestion or level the congestion in the store by visualizing the congestion information.

Here, an example of a display image showing congestion information will be described with reference to FIG. 6A. FIG. 6A is a diagram showing an example of a display image showing congestion information according to the embodiment. A display image 410 shown in FIG. 6A is an example of a layout for displaying congestion information of one restaurant.

As shown in FIG. 6A, the layout of the display image 410 is configured by a display area 411 to a display area 414.

The display area 411 is an area for displaying a store name of the restaurant, and is displayed as "AAA store".

The display area 412 is an area for displaying store information of the restaurant. The store information may be displayed in any format such as a photograph or a sentence.

The display area 413 is an area for displaying the congestion information of the restaurant, and the information indicating that the congestion status is "congested" is displayed in text as "congested now". When it is indicated that the congestion status is "few vacant seats", the display area 413 may be displayed in text as "few vacant seats". When it is indicated that the congestion status is "vacant seats", the display area 413 may be displayed in text as "vacant seats".

The display area 414 is an area for displaying public relations (PR) information of the restaurant, and any information may be displayed. The PR information is, for example, information desired to be appealed to the user of the facility 10. Examples of the information include information of recommended products, information on store operations, and the like. For example, the user checks the PR information, and a user's desire to visit the store can thus be improved. In an example shown in FIG. 6A, the information on store operations of "We are open from 9:00. We welcome you to visit our store." are displayed.

The layout of the display image 410, the displayed information, and the like are not limited to the above examples. For example, product information is displayed as the PR information displayed on the display area 414, and products desired to be provided to customers visiting the store can thus be efficiently publicized. For example, recommended products may be displayed at each corner of a food court of the supermarket, not limited to a restaurant. In addition to the product information, special sale information or other profitable information of the store may be displayed. Accordingly, it is expected to increase a customer unit price per visitor.

Moreover, the display processing unit 3210 displays, on the display device 400, prediction information indicating that the congestion status is changed at a time predicted by the prediction unit 3208. For example, the display processing unit 3210 displays, on the display device 400 as the prediction information, a time until the congestion status of the facility 10 is changed from the first congestion status to the second congestion status. As a result, the user can easily grasp a timing at which the congestion status of the facility 10 is changed by looking at the display image. Further, the user can adjust a time to go to the facility 10 according to the grasped timing, thereby using the facility 10 without waiting time at the facility 10. The time when the congestion status is changed from the first congestion status to the second congestion status can be calculated by a difference between the time predicted by the prediction unit 3208 and the current time.

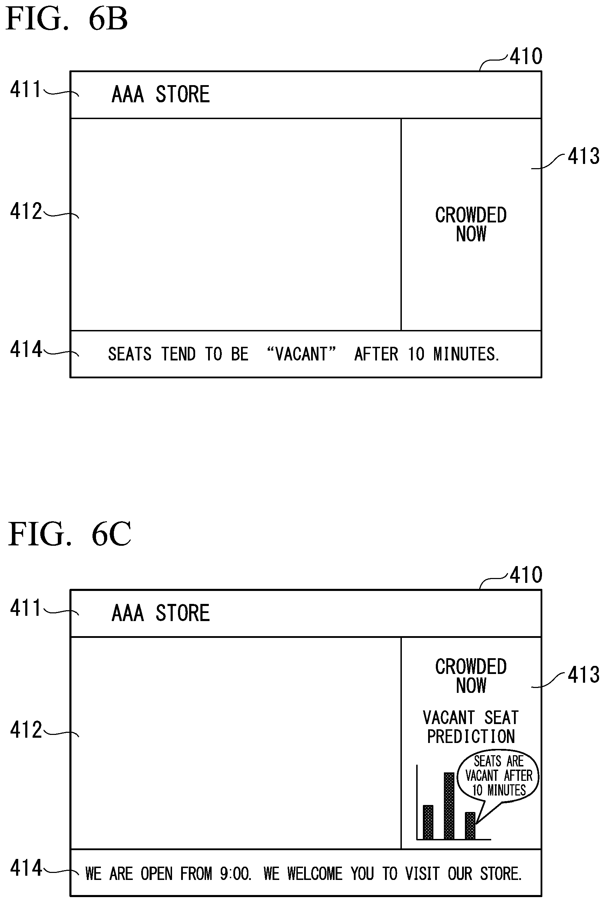

Here, an example of a display image showing prediction information will be described with reference to FIGS. 6B and 6C. FIG. 6B is a diagram showing an example of a display image showing prediction information in text according to the embodiment. FIG. 6C is a diagram showing an example of a display image illustrating the prediction information according to the embodiment.

The prediction information is displayed in any format. For example, as shown in display area 414 of FIG. 6B, the prediction information is indicated by texts. Specifically, the prediction information "seats tend to be "vacant" after 10 minutes" is displayed in the display area 414. The prediction information indicates the time until the congestion status of the facility 10 is changed from the first congestion status to the second congestion status. The same information as the display image 410 shown in FIG. 6A is displayed in the display areas 411 to 413 of the display image 410.

Moreover, for example, the prediction information is illustrated as shown in the display area 413 in FIG. 6C. Specifically, a bar graph and an illustration of a speech balloon are drawn in the display area 413, and the prediction information is displayed in a speech balloon with the text such as "seats are vacant after 10 minutes". The prediction information indicates the time until the congestion status of the facility 10 is changed from the first congestion status to the second congestion status. The same information as the display image 410 shown in FIG. 6A is displayed in the display area 411, the display area 412, and the display area 414 of the display image 410.

The display processing unit 3210 may display the prediction information specifying the time predicted by the prediction unit 3208. For example, when the congestion status at "12:45" is predicted as "vacant seats", the display processing unit 3210 displays "seats tend to be "vacant" at 12:45" in the display area 414.

Moreover, the display processing unit 3210 may also display, on the display device 400 as the prediction information, the duration time predicted by the prediction unit 3208. Accordingly, the user can easily grasp the duration time of the congestion status (for example, "vacant seats") in the facility 10 by looking at the display image. Further, the user can adjust a time so as to arrive at the facility 10 within the duration time of the congestion status. As a result, the user can adjust a schedule with more time than that when a specific time is displayed.

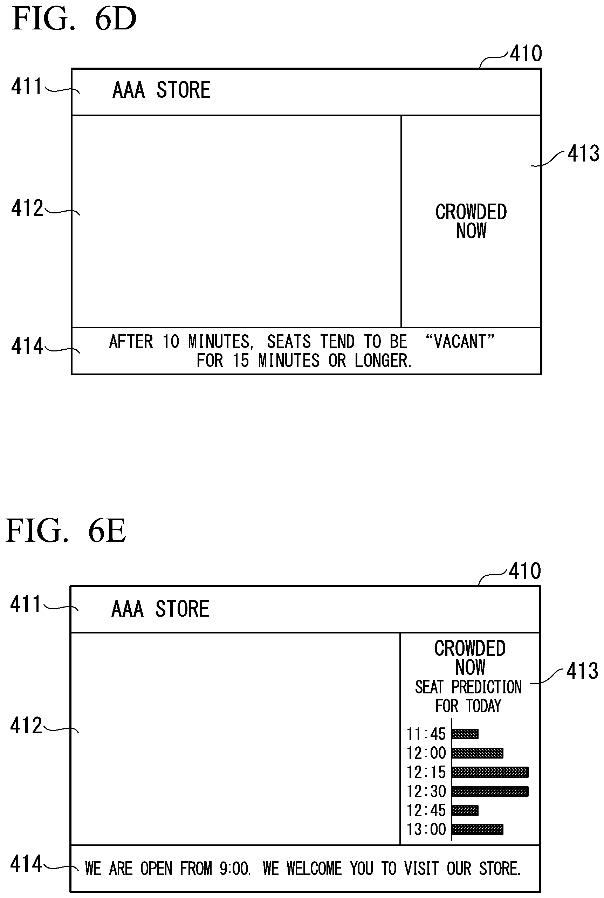

Here, an example of a display image showing prediction information will be described with reference to FIG. 6D. FIG. 6D is a diagram showing an example of a display image including a duration time of a second congestion status as prediction information according to the embodiment.

For example, as shown in display area 414 in FIG. 6D, the duration time of the second congestion status may be displayed as the prediction information. Specifically, the prediction information "after 10 minutes, seats tend to be "vacant" for 15 minutes or longer" is displayed in the display area 414. The prediction information indicates a duration time of the second congestion status in the facility 10.

The same information as the display image 410 shown in FIG. 6A is displayed in the display areas 411 to 413 of the display image 410.

Moreover, the display processing unit 3210 displays, on the display device 400, prediction information indicating a plurality of congestion statuses predicted by the prediction unit 3208. For example, the display processing unit 3210 displays the plurality of congestion statuses in a form of graphs, for example, so that temporal changes in the plurality of congestion information can be grasped. As a result, the user can easily grasp a temporal change in the congestion status of the facility 10 by looking at the display image. Further, when a plurality of target congestion statuses (for example, "vacant seats" are shown in the temporal change, the user can select a time to visit the facility 10 according to his/her schedule. As a result, the user can adjust a schedule with more time than that when a specific time is displayed.

Here, an example of a display image showing prediction information will be described with reference to FIG. 6E. FIG. 6E is a diagram showing an example of a display image including temporal changes of the congestion status as prediction information according to the embodiment.

For example, as shown in display area 413 in FIG. 6E, the temporal change in the congestion status may be displayed as the prediction information. Specifically, a bar graph shows a temporal change in a congestion status from "11:45" to "13:00" in the display area 413. The same information as the display image 410 shown in FIG. 6A is displayed in the display area 411, the display area 412, and the display area 414 of the display image 410.

As described above, the user of the facility 10 can adjust the time to visit the facility 10 based on the display image, thereby dispersing time zones in which the facility 10 is congested and leveling the congestion in the facility 10.

### (3) Storage Unit 330

The storage unit 330 is configured by storage media such as a hard disk drive (HDD), a flash memory, electrically erasable programmable read only memory (EEPROM), random access read/write memory (RAM), and read only memory (ROM), or any combination of these storage media. As the storage unit 330, for example, a nonvolatile memory can be used.

The storage unit 330 has a function of storing various information. For example, the storage unit 330 stores the prediction model 3302 capable of predicting the congestion status of the facility 10.

### <3. Processing Flow>

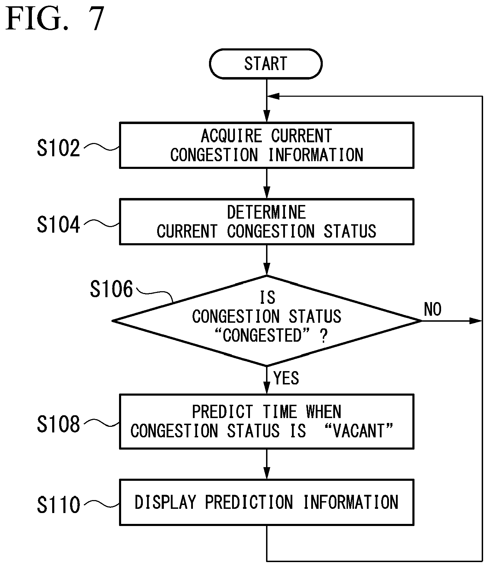

A processing flow in the congestion information display system 1 according to the embodiment will be described with reference to FIG. 7. FIG. 7 is a flowchart showing an example of a processing flow in a congestion information display system 1 according to the embodiment.

As shown in FIG. 7, first, the congestion information display system 1 acquires the current congestion information of the facility 10 (S102). For example, the congestion information acquisition unit 3204 of the server device 300 acquires the current congestion information based on the sensing information acquired by the sensor device 100.

Next, the congestion information display system 1 determines the current congestion status of the facility 10 (S104). For example, the determination unit 3206 of the server device 300 determines the current congestion status of the facility 10, based on the congestion information acquired by the congestion information acquisition unit 3204.

Next, the congestion information display system 1 determines whether or not the congestion status is "congested" (S106). For example, the determination unit 3206 of the server device 300 determines whether or not the congestion status is "congested" based on the determination result of the congestion status.

When the congestion status is not "congested" (S106/NO), the congestion information display system 1 repeats the process from S 102. When the congestion status is "congested" (S106/YES), the congestion information display system 1 performs the process of S108.

The congestion information display system 1 predicts the time when the congestion status is "vacant seats" (S 108). For example, the prediction unit 3208 of the server device 300 predicts the time when the congestion status is "vacant seats" based on the prediction model 3302.

Next, the congestion information display system 1 displays the prediction information on the display device 400 (S110). For example, the display processing unit 3210 of the server device 300 generates a display image showing the prediction information, and displays the display image on the display device 400. After displaying the prediction information, the congestion information display system 1 repeats the process from S102.

As described above, the storage unit 330 of the congestion information display system 1 according to the embodiment stores the prediction model 3302 capable of predicting the congestion status of the facility 10.

The prediction unit 3208 predicts a time when the congestion status of the facility 10 is changed from a first congestion status to a second congestion status, based on the prediction model 3302.

The display processing unit 3210 displays, on the display device 400, the prediction information on the time predicted by the prediction unit 3208.

With the above configuration, the congestion information display system 1 causes the display device 400 to display not only whether there are currently vacant seats in the facility 10, but also prediction information that predicts when the seats will be vacant. As a result, the user of the facility 10 can refer to the prediction information and adjust the time to visit the facility 10 so as to shorten the waiting time.

Therefore, the congestion information display system 1 can allow the user to shorten the waiting time at the facility in order to use the facility.

### <4. Modified Example>

The embodiment of the present invention has been described. Next, modified examples of the embodiment of the present invention will be described. The modified examples described below may be applied to the embodiments of the present invention alone, or may be applied to the embodiments of the present invention in combination. In addition, the modified examples may be applied instead of the configuration described in the embodiments of the present invention, or may be additionally applied to the configuration described in the embodiments of the present invention.

### (1) First Modified Example

In the embodiment described above, an example in which the first congestion status is information indicating that there are no vacant seats, such as "congested," and the second congestion status is information indicating that there are vacant seats, such as "vacant seats", has been described. That is, an example in which the congestion information display system 1 predicts the time when vacant seats will occur (prediction of vacant seats) has been described, but the embodiment is not limited to the above example. For example, the first congestion status is information indicating that there are vacant seats, such as "vacant seats," and the second congestion status is information indicating that there are no vacant seats, such as "congested". That is, the congestion information display system 1 may predict a congestion time (predict congestion).

### (2) Second Modified Example

In the embodiments described above, an example in which the congestion information display system 1 is applied to visualization of the congestion information and the prediction information in the restaurant has been described. However, the embodiment is not limited to the example described above. For example, the congestion information display system 1 may be applied to the visualization of the congestion information and the prediction information of a cash register of the store (for example, a cash register of a food court). The user can adjust a timing of lining up at the cash register by visualizing the congestion information and the prediction information of the cash register. As a result, it is possible to prevent crowding of users or staff near the cash register. Further, the staff of the store can grasp the current status of each cash register.

Thus, the congestion information display system 1 can alleviate a stress on the users or staff due to the crowding near the cash register or level the congestion of the cash register, by visualizing the congestion information and the prediction information.

The congestion information display system 1 may display the congestion information and the prediction information of the cash register on a bulletin board (digital signage) in the store, or may display the congestion information and the prediction information of the cash register on the website of the store. The user can check the displayed waiting time (prediction information) at the cash register displayed on a bulletin board or website in the store, to thereby easily grasp the time zone in which the congestion can be avoided.

Moreover, the congestion information display system 1 can display real-time product information as the PR information, to thereby efficiently appeal products desired to be provided to the user. The real-time product information is, for example, special sale information, profitable information, and the like. As the information, for example, information corresponding to each corner may be displayed for each corner such as a food court. As a result, the store can provide the user with a real-time advertising service for each spot. Accordingly, it is expected to increase a customer unit price per user.

### (3) Third Modified Example

For example, the congestion information display system 1 may be applied to visualization of the congestion information and the prediction information in a playroom for children provided in the store. As a result, it is expected to level the congestion in the playroom, alleviate the stress on the users and staff, and improve a customer service.

### (4) Fourth Modified Example

For example, the congestion information display system 1 may be applied to visualization of the congestion information and the prediction information in a rest room for babies provided in the store. As a result, it is expected to alleviate the congestion in the rest room for babies and eliminate crowding of the users. Furthermore, it is expected to have an effect of improving an image as a facility that is friendly to families for raising children.

### (5) Fifth Modified Example

Crowding information indicating a crowded status according to the congestion status is displayed in the display image. For example, when the congestion status is "vacant seats", information indicating that the facility 10 can be used without being crowded with other users, specifically, a message such as "there is no concern about crowding." is displayed. On the other hand, when the congestion status is "congested", information indicating that there is a risk of congesting with other users, specifically, a message such as "there may be congested" is displayed.

As a result, the congestion information display system 1 can display the crowding information according to the congestion status of the facility 10 on the display device 400. The user can check the crowding information displayed on the display device 400 in advance, to thereby avoid the crowding of other users.

### (6) Sixth Modified Example

In the embodiment described above, an example in which the prediction model is generated by the model generation unit 3202 has been described, but the embodiment is not limited to the above example. The prediction model may be generated by a system or device other than the congestion information display system 1.

The modified examples of the embodiments of the present invention have been described. The congestion information display system 1 in the above-described embodiments may be realized by a computer. In that case, the congestion information display system 1 may be realized by causing a program for realizing the function to record a computer-readable recording medium and read the program recorded in the recording medium into a computer system. The "computer system" referred to herein includes an OS and hardware such as peripherals. In addition, the "computer-readable recording medium" refers to portable media such as a flexible disk, a magneto-optical disk, a ROM, and a CD-ROM, and a storage device such as a hard disk built in the computer system. Furthermore, the computer-readable recording medium may include a medium that dynamically holds a program for a short time, like a communication line when the program is transmitted via a network such as the Internet or a communication circuit such as a telephone line, and a medium that holds a program for a predetermined time, like a volatile memory in a computer system serving as a server or a client in that case. Further, the above program may be for realizing a part of the functions described above, or may realize the functions described above in combination with a program already recorded in a computer system. It may be realized using a programmable logic device such as field programmable gate array (FPGA).

The embodiments described above can be expressed as follows.

A computer-readable non-temporary storage medium having a program stored therein, the program for causing a computer to:
store a prediction model capable of predicting a congestion status of a facility;
predict a time when the congestion status of the facility is changed from a first congestion status to a second congestion status based on the prediction model; and
display, on a display device, prediction information indicating that the congestion status is changed at the time predicted by the prediction unit.

Although the embodiments of the invention have been described in detail with reference to the drawings, the specific configuration is not limited to the embodiments, and various design modifications and the like may be made without departing from the gist of the invention.

### [Industrial Applicability]

According to the present invention, a time when the user waits in the facility in order to use the facility can be shortened.

### [Reference Signs List]

1: Congestion information display system
10: Facility
100: Sensor device
200: Gateway
300: Server device
310: Communication unit
320: Control unit
330: Storage unit
400: Display device
3202: Model generation unit
3204: Congestion information acquisition unit
3206: Determination unit
3208: Prediction unit
3210: Display processing unit
NW: Network

## Claims

1. A congestion information display system comprising:
a storage unit configured to store a prediction model which enables prediction of a congestion status of a facility;
a prediction unit configured to predict a time when the congestion status of the facility is changed from a first congestion status to a second congestion status, based on the prediction model; and
a display processing unit configured to display, on a display device, prediction information indicating that the congestion status is changed at the time predicted by the prediction unit.

2. The congestion information display system according to Claim 1, further comprising:
a determination unit that determines a current congestion status of the facility,
wherein when the determination unit determines that the current congestion status of the facility is the first congestion status, the prediction unit predicts a time when the current congestion status of the facility is changed from the first congestion status to the second congestion status.

3. The congestion information display system according to Claim 1 or 2,
wherein the display processing unit displays, on the display device as the prediction information, a time until the congestion status of the facility is changed from the first congestion status to the second congestion status.

4. The congestion information display system according to Claim 1 or 2,
wherein the prediction unit further predicts a duration time of the second congestion status, and
the display processing unit displays the duration time predicted by the prediction unit on the display device as the prediction information.

5. The congestion information display system according to Claim 1 or 2,
wherein the prediction unit collectively predicts congestion statuses at a plurality of times after the current time, and
the display processing unit displays, on the display device, the prediction information indicating a plurality of the congestion statuses predicted by the prediction unit.

6. The congestion information display system according to any one of Claims 1 to 5, further comprising:
a model generation unit configured to generate, as the prediction model, a trained model obtained by machine learning, based on sensing information on presence or absence of a user in the facility, acquired by a sensor device provided in the facility, and congestion information corresponding to the sensing information indicating the congestion status of the facility.

7. A congestion information display method comprising:
storing, via a storage unit, a prediction model which enables prediction of a congestion status of a facility;
predicting, via a prediction unit, a time when the congestion status of the facility is changed from a first congestion status to a second congestion status based on the prediction model; and
displaying, on a display processing unit, prediction information indicating that the congestion status is changed at the time predicted by the prediction unit on a display device.

8. A program for causing a computer to function as:
a storage unit configured to store a prediction model which enables prediction of a congestion status of a facility;
a prediction unit configured to predict a time when the congestion status of the facility is changed from a first congestion status to a second congestion status based on the prediction model; and
a display processing unit configured to display, on a display device, prediction information indicating that the congestion status is changed at the time predicted by the prediction unit.
